## Europäisches Patentamt
## European Patent Office
## Office européen des brevets

(19)

(11) Veröffentlichungsnummer : **0 147 585**
**B1**

(12)

# EUROPÄISCHE PATENTSCHRIFT

(45) Veröffentlichungstag der Patentschrift :
16.06.87

(51) Int. Cl.⁴ : **B 60 T    8/36**

(21) Anmeldenummer : **84113465.3**

(22) Anmeldetag : **08.11.84**

(54) **Gleitschutzventil für druckluftgebremste Fahrzeuge.**

(30) Priorität : **13.12.83 DE 3345080**

(43) Veröffentlichungstag der Anmeldung :
**10.07.85 Patentblatt 85/28**

(45) Bekanntmachung des Hinweises auf die Patenterteilung : **16.06.87 Patentblatt 87/25**

(84) Benannte Vertragsstaaten :
**CH DE FR GB LI SE**

(56) Entgegenhaltungen :
**DE-A- 2 232 664**
**DE-A- 2 402 375**
**DE-A- 2 713 531**
**US-A- 4 278 300**

(73) Patentinhaber : **KNORR-BREMSE AG**
**Moosacher Strasse 80 Postfach 401060**
**D-8000 München 40 (DE)**

(72) Erfinder : **Krause, Georg**
**Stögerstrasse 10**
**D-8000 München 21 (DE)**
Erfinder : **Pöllinger, Hans**
**Rainfarnstrasse 65**
**D-8000 München 45 (DE)**

Jouve, 18, rue St-Denis, 75001 Paris, France

EP 0 147 585 B1

## Beschreibung

Die Erfindung betrifft ein Gleitschutzventil für druckluftgebremste Fahrzeuge, mit einem in eine Verbindung von einer Bremsdruckquelle zu wenigstens einem Bremszylinder eingeordneten Absperrventil, gegebenenfalls Membranabsperrventil, das von einem Kolben- oder Membranglied schaltbar ist, welches in Ventilschließrichtung wirkend vom durch ein Vorsteuerventil überwacht zuführbaren Druck der Bremsdruckquelle und der Kraft einer Feder und andererseits, in Ventilöffnungsrichtung wirkend, ständig vom Druck der Bremsdruckquelle beaufschlagt ist.

Gleitschutzventile der vorstehend genannten Art sind beispielsweise aus der DE-A-2 232 664 und dem Aufsatz « Eine neue Gleitschutzgeneration für die Eisenbahn unter Verwendung von Mikroprozessoren » der Zeitschrift « Elektrische Bahnen », September 1981, bekannt. Diese Gleitschutzventile weisen die Eigenart auf, daß beim Schließen des Absperrventils das Kolben- oder Membranglied beidseitig vom gleichen Druck, nämlich dem Druck der Bremsdruckquelle, auf gleichgroßen Flächen beaufschlagt ist, somit nur die zusätzlich das Absperrventil in Schließrichtung belastende Feder das Schließen und Geschlossenhalten des Absperrventils bewirken kann. Die Feder muß eine gewisse Mindeststärke aufweisen, um ein sicheres Schließen und Geschlossenhalten des Absperrventils bewirken zu können ; würde die Feder zu schwach bemessen, könnten am Absperrventil Undichtheiten auftreten, durch welche die Gleitschutzfunktion störende Drucknahspeisungen von der Bremsdruckquelle zum Bremszylinder erfolgen können. Es ist besonders zu beachten, daß die Kraft der Feder ausreichen muß, auch bei tiefen Temperaturen und dementsprechend schwergängigem bzw. steifem Kolben- oder Membranglied das Absperrventil sicher und dicht zu schließen. Andererseits soll die Feder jedoch möglichst schwach sein, damit beim Lösen der Bremsen die Druckluft aus dem Bremszylinder möglichst vollständig, durch das Absperrventil ungehindert, zur in diesem Zustand Atmosphärendruck führenden Bremsdruckquelle abfließen kann. Die durch die Kraft der Feder bewirkte Vorspannung des Absperrventils in Schließrichtung bewirkt dabei in jedem Falle eine gewisse Restdruckrückhaltung im Bremszylinder, diese Restdruckrückhaltung kann zur Folge haben, daß die Bremsen mit einer Restkraft angelegt bleiben, was zu Störungen im Fahrzeugbetrieb führen kann. Die Restdruckrückhaltung muß daher durch möglichst schwache Dimensionierung der Feder möglichst niedrig gehalten werden. An die Feder werden daher gegensätzliche, nicht miteinander zu vereinbarende Anforderungen gestellt.

Zum Vermeiden der vorstehend genannten Eigenheit ist es beispielsweise aus der DE-A-2 713-531 bekannt, das Kolben- oder Membranglied differentialkolbenartig auszubilden, wobei der über das Vorsteuerventil überwacht zuführbare Druck eine größere Kolbenfläche als der andersseitig wirkende Druck des Kolben- oder Membrangliedes beaufschlagt. Bei dieser Ausführung des Gleitschutzventils entfällt die Feder, das Schließen des Absperrventils wird durch Druckbeaufschlagen der größeren Kolbenfläche des Kolben- oder Membrangliedes mit einer durch den Flächenunterschied bestimmbaren Kraft bewirkt. Die differentialkolbenartige Ausbildung des Kolben- oder Membrangliedes ist jedoch aufwendig, wodurch das Gleitschutzventil verteuert wird.

Es ist Aufgabe der Erfindung, ein Gleitschutzventil der eingangs genannten Art derart auszugestalten, daß trotz zum sicheren Schließen und Geschlossenhalten des Absperrventils ausreichend kräftiger Bemessung der Feder kein Restdruck beim Bremsenlösen im Bremszylinder zurückgehalten wird.

Diese Aufgabe wird nach der Erfindung dadurch gelöst, daß das Absperrventil durch einen in seinem Durchströmungsquerschnitt durch eine Düse gedrosselten Bypasskanal überbrückt ist. Beim Bremsenlösen kann sich der bei Schließen des Absperrventils im Bremszylinder noch befindliche Restdruck durch den Bypasskanal zur Bremsdruckquelle hin vollständig abbauen, während Bremsschutzvorgängen bewirkt dagegen die geringe, durch die Düse gedrosselte Überbrückung des geschlossenen Absperrventils keine merkliche und störende Drucknachspeisung zum Bremszylinder.

Nach der weiteren Erfindung ist es zweckmäßig, wenn der Bypasskanal als eine den Ventilsitz des Absperrventils tragende Wandung durchsetzende Drosselbohrung ausgebildet ist. Der Bypasskanal mit der Düse ist hierdurch auch bereits bei vorhandenen Gleitschutzventilen zumeist in einfacher Weise herstellbar, vorhandene Gleitschutzventile sind also kostengünstig nachrüstbar.

In Abwandlung hierzu ist es auch möglich, den Bremszylinder über eine Düse mit der Atmosphäre zu verbinden ; der Restdruck kann sich dann unmittelbar zur Atmosphäre abbauen.

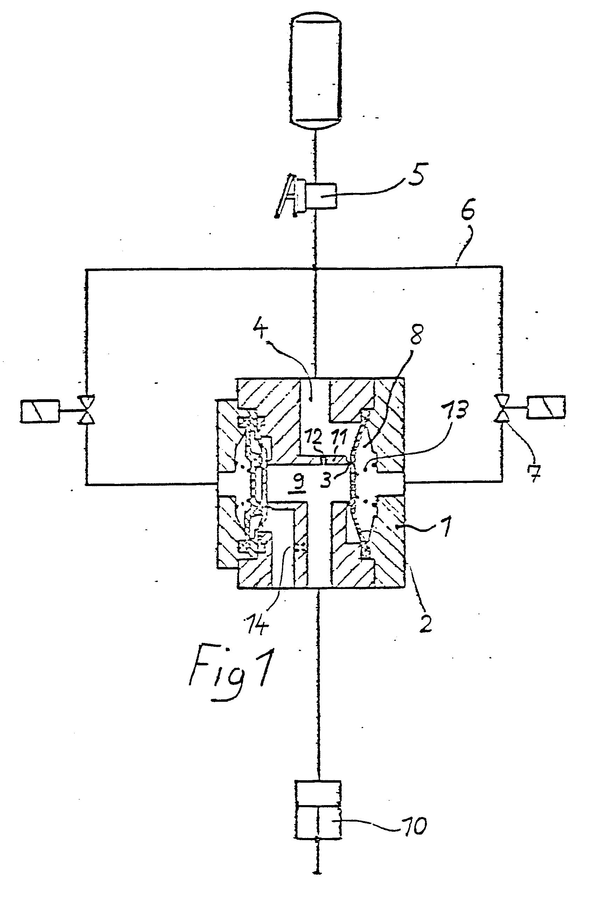

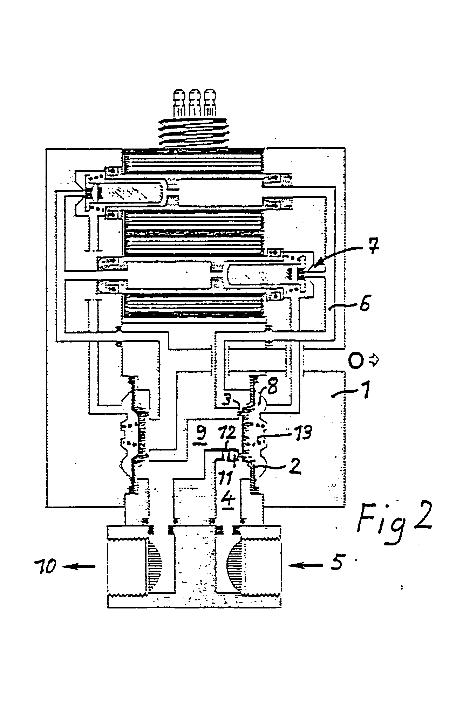

In der Zeichnung Fig. 1 und Fig. 2 sind zwei Ausführungsbeispiele für nach der Erfindung ausgebildete Gleitschutzventile im Schnitt dargestellt.

Die Figur 1 zeigt ein Gleitschutzventil entsprechend der bereits erwähnten DE-A-2 232 664, wobei hier das aus einer in einem Gehäuse 1 gehaltenen Membrane 2 und einem Ventilsitz 3 gebildete Membranabsperrventil 2, 3 wesentlich ist. Die Membrane 2 ist auf einem den Ventilsitz 3 umgebenden Ringabschnitt vom Druck in einer Kammer 4 in Öffnungsrichtung des Membranabsperrventils 2, 3 wirkend beaufschlagt, die Kammer 4 steht mit einem als Bremsdruckquelle dienenden Bremsventil 5 in Verbindung. Die Kammer 4 steht über eine Zweigleitung 6 mit eingeordnetem, als Magnetventil ausgebildetem Vorsteuerventil 7 mit einer Kammer 8 in Verbindung, welche von der Membrane 2 begrenzt ist ; die Kammern 4 und 8 befinden sich auf gegenüberliegenden Seiten der Membrane 2. Das Vorsteuerventil 7 hält die Kammer 8 normalerweise entlüftet, nur während Gleitvorgängen öffnet das Vorsteuerventil 7 und beaufschlagt die Kammer 8 mit dem vom Bremsventil 5 ausgesteuerten Druck. Der Ventilsitz 3 umschließt eine Kammer 9, an welche der Bremszylinder 10 angeschlossen ist. Der Ventilsitz 3 befindet sich an einer Wandung 11, welche die Kammern 4 und 9 voneinander trennt und welche einen durch die Anschlußöffnungen für die Kammern 4 und/oder 9 zugänglichen Wandungsabschnitt aufweist. In diesem Wandungsabschnitt der Wandung 11 befindet sich eine Drosselbohrung 12, welche die Wandung 11 durchsetzt und somit die Kammern 4 und 9 miteinander verbindet. In der Kammer 8 befindet sich eine Feder 13, welche sich einerseits am Gehäuse 1 abstützt und andererseits an der Membrane 2 anliegt und mit ihrer Vorspannung das Membranabsperrventil 2, 3 in Schließrichtung belastet.

Der weitere, hier nicht interessierende Aufbau des Gleitschutzventils kann der DE-A-2 232 664 entnommen werden.

Bei normalem, gleitfreiem Bremsbetrieb hält das Vorsteuerventil 7, wie bereits erwähnt, die Kammer 8 entlüftet, so daß beim Einsteuern eines Bremsdruckes durch das Bremsventil 5 in die Kammer 4 dieser Bremsdruck die Membrane 2 in Richtung zur Kammer 8 entgegen der Kraft der Feder 13 bewegt und dabei das Membranabsperrventil 2, 3 öffnet. Der Bremsdruck strömt sodann in den Bremszylinder 10 ein.

Beim nachfolgenden Lösen verbindet das Bremsventil 5 die Kammer 4 mit der Atmosphäre und Druckluft strömt zum Druckabbau aus dem Bremszylinder 10 durch das vorerst geöffnet bleibende Membranabsperrventil 2, 3 und das Bremsventil 5 zur Atmosphäre ab. Bei Erreichen einer gewissen Restdruckhöhe im Bremszylinder 10 und damit den Kammern 9 und 4 vermag die Feder 13 die Membrane 2 entgegen dieser Restdruckhöhe zurückzubewegen, wodurch das Membranabsperrventil 2, 3 geschlossen wird. Anschließend entlüftet sich die Kammer 4 vollständig, während sich der Restdruck aus dem Bremszylinder 10 und der Kammer 9 durch die Drosselbohrung 12 verzögert allmählich zur Kammer 4 und durch das Bremsventil 5 ebenfalls zur Atmosphäre hin abbaut, bis auch im Bremszylinder 10 Atmosphärendruck erreicht ist.

Tritt während des Bremsvorganges ein Gleitvorgang auf, so wird das Vorsteuerventil 7 geschaltet und beaufschlagt die Kammer 8 mit dem Bremsdruck, zu beiden Seiten der Membrane 2 herrscht dann gleiche Druckhöhe und die Kraft der Feder 13 bewirkt ein Bewegen der Membrane 2 bis zum Aufsetzen auf den Ventilsitz 3 und damit ein Schließen des Membranabsperrventils 2, 3. Die Feder 13 ist ausreichend stark bemessen, um auch bei kalter Witterung und maximalen Bremsdrücken ein sicheres, dichtes Schließen des Membranabsperrventils 2, 3 bewirken zu können. Bei Beendigen des Gleitvorganges schaltet das Vorsteuerventil 7 zurück und entlüftet die Kammer 8, so daß der in der Kammer 4 anstehende Druck das Membranabsperrventil 2, 3 entgegen der Kraft der Feder 13 wieder rasch öffnet. Die übrige Funktion des Gleitschutzventils ist hier unwesentlich, sie kann der erwähnten DE-A-2 232 664 entnommen werden.

Das Gleitschutzventil nach Fig. 2 weist einen dem Gleitschutzventil nach Fig. 1 in den hier interessierenden Teilen entsprechenden Aufbau auf, seine Teile sind daher mit der Fig. 1 entsprechenden Bezugszahlen versehen. Im weiteren ist der Aufbau des Gleitschutzventils nach Fig. 2 in seinen hier nicht interessierenden Teilen dem eingangs erwähnten Aufsatz entnehmbar. Sowohl im Aufbau wie in seiner Funktion entspricht somit das Gleitschutzventil nach Fig. 2 der Beschreibung zu Fig. 1, so daß sich weitere Ausführungen hierzu erübrigen.

Es ist wesentlich, daß die Wandung 11 in ihrem die Drosselbohrung 12 aufweisenden Abschnitt auch beim Gleitschutzventil nach Fig. 2 durch eine Anschlußbohrung für eine Kammer, nämlich die Kammer 4, zugänglich ist, die Drosselbohrung 12 kann daher in einfacher Weise auch bei bereits vorhandenen Gleitschutzventilen angebracht werden.

In Abwandlung der vorstehend beschriebenen Ausführungsbeispiele ist es auch möglich, anstelle der entfallenden Drosselbohrung 12 eine in Fig. 1 gestrichelt eingezeichnete Düse 14 vorzusehen, welche den Bremszylinder 10 mit der Atmosphäre verbindet. Die Düse 14 kann an beliebiger Stelle, auch außerhalb des Gehäuses 1, angeordnet sein. Da die Druckluftbremse von Fahrzeugen wegen möglichen Undichtheiten an sich nicht als Parkbremse für abzustellende Fahrzeuge verwendet werden soll, ist die durch die Düse 14 bedingte Entlüftung des Bremszylinders 10 unschädlich : Während Betriebsbremsungen ist der jeweilige Bremsdruck durch Druckluftnachspeisung aus der Bremsdruckquelle 5 ohne weiteres aufrechterhaltbar. Bei dieser Ausbildung wird der nach Schließen des Absperrventils 2, 3 während Lösevorgängen anstehende Restdruck aus dem Bremszylinder 10 durch die Düse 14 unmittelbar zur Atmosphäre abgebaut. In weiterer Ausbildung kann in Serie zur Düse 14 ein nur unterhalb eines bestimmten Bremszylinderdruckes, der jedoch höher als der erwähnte Restdruck im Bremszylinder 10 ist, offenes Entlüftungsventil angeordnet sein. Dieses die Verbindung vom Bremszylinder 10 durch die Düse 14 zur Atmosphäre überwachende, nicht dargestellte Entlüftungsventil kann als in Öffnungsrichtung federbelastetes Membranabsperrventil ausgebildet sein : es vermeidet eine zwar unschädliche, aber doch einen unnötigen Druckluftverbrauch bedingende Bremsdruck-Entlüftung durch die Düse 14 während eine gewisse, niedrige Bremsstärke überschreitenden Betriebsbremsungen.

Bezugszeichenliste

| | |
|---|---|
| 1 | Gehäuse |
| 2 | Membrane |
| 2, 3 | Membranabsperrventil |
| 4 | Kammer |
| 5 | Bremsventil |
| 6 | Zweigleitung |
| 7 | Vorsteuerventil |
| 8 | Kammer |
| 9 | Kammer |
| 10 | Bremszylinder |
| 11 | Wandung |
| 12 | Drosselbohrung |
| 13 | Feder |
| 14 | Düse |

**Patentansprüche**

1. Gleitschutzventil für druckluftgebremste Fahrzeuge, mit einem in eine Verbindung von einer Bremsdruckquelle (5) zu wenigstens einem Bremszylinder (10) eingeordneten Absperrventil, gegebenenfalls Membranabsperrventil (2, 3), das von einem Kolben- oder Membranglied (2) schaltbar ist, welches in Ventilschließrichtung wirkend vom durch ein Vorsteuerventil (7) überwacht zuführbaren Druck der Bremsdruckquelle (5) und der Kraft einer Feder (13) und andererseits, in Ventilöffnungsrichtung wirkend, ständig vom Druck der Bremsdruckquelle (5) beaufschlagt ist, dadurch gekennzeichnet, daß das Absperrventil (2, 3) durch einen in seinem Durchströmungsquerschnitt durch eine Düse gedrosselten Bypasskanal (12) überbrückt ist.

2. Gleitschutzventil nach Anspruch 1, dadurch gekennzeichnet, daß der Bypasskanal als eine den Ventilsitz (3) des Absperrventils (2, 3) tragende Wandung (11) durchsetzende Drosselbohrung (12) ausgebildet ist.

3. Gleitschutzventil für druckluftgebremste Fahrzeuge, mit einem in eine Verbindung von einer Bremsdruckquelle (5) zu wenigstens einem Bremszylinder (10) eingeordneten Absperrventil, gegebenenfalls Membranabsperrventil (2, 3), das von einem Kolben- oder Membranglied (2) schaltbar ist, welches in Ventilschließrichtung wirkend von durch ein Vorsteuerventil (7) überwacht zuführbaren Druck der Bremsdruckquelle (5) und der Kraft einer Feder (13) und andererseits, in Ventilöffnungsrichtung wirkend, ständig vom Druck der Bremsdruckquelle (5) beaufschlagt ist, dadurch gekennzeichnet, daß der Bremszylinder (10) über eine Düse (14) mit der Atmosphäre verbunden ist.

4. Gleitschutzventil nach Anspruch 3, dadurch gekennzeichnet, daß in die vom Bremszylinder (10) über die Düse (14) zur Atmosphäre führende Verbindung ein nur unterhalb eines bestimmten Bremszylinderdruck offenes, gegebenenfalls als in Öffnungsrichtung federbelastetes Membranabsperrventil ausgebildetes Entlüftungsventil eingeordnet ist.

**Claims**

1. Anti-skid valve for vehicles braked by compressed air, having a stop valve, if necessary a diaphragm stop valve (2, 3), provided in a connection from a brake pressure source (5) to at least one brake cylinder (10), which valve can be switched by a piston- or diaphragm-member (2) which acting in the valve closure direction is operated-on by the supply pressure of the brake pressure source (5) (monitored by a servo-valve (7)) and by the force of a spring (13), and on the other hand acting in the valve opening direction is constantly operated-on by the pressure of the brake pressure source (5), characterised in that the stop valve (2, 3) is bridged by a by-pass channel (12) throttled in its through-flow cross-section by a nozzle.

2. Anti-skid valve according to claim 1, characterised in that the by-pass channel is constructed as a throttle bore (12) penetrating a wall (11) carrying the valve seat (3) of the stop valve (2, 3).

3. Anti-skid valve for vehicles braked by compressed air, having a stop valve, if necessary a diaphragm stop valve (2, 3), provided in a connection from a brake pressure source (5) to at least one brake cylinder (10), which valve can be switched by a piston- or diaphragm member (2) which acting in the valve closure direction is operated-on by the supply pressure of the brake pressure source (5) (monitored by a servo-valve (7)) and by the force of a spring (13), and on the other hand acting in the valve opening direction is constantly operated-on by the pressure of the brake pressure source (5), characterised in that the brake cylinder (10) is coupled to the atmosphere via a nozzle (14).

4. Anti-skid valve according to claim 3, characterised in that an air vent valve, constructed if necessary as a diaphragm stop valve which is spring-loaded in the opening direction, is set into the connection leading from the brake cylinder (10) via the nozzle (14) to the atmosphere, which valve is only open below a specific brake cylinder pressure.

**Revendications**

1. Soupape anti-enrayage pour des véhicules freinés à l'air comprimé, comportant une soupape d'arrêt, éventuellement une soupape d'arrêt à membrane (2, 3), montée dans une liaison menant d'une source de pression de freinage (5) à au moins un cylindre de frein (10), laquelle soupape d'arrêt est susceptible d'être commutée par un élément de piston ou de membrane (2) qui, agissant dans le sens de la fermeture de la soupape, est chargé par une pression de la source de pression de freinage (5) amenée avec contrôle par une soupape de pré-commande (7) et par la force d'un ressort (13) et d'autre part et en permanence, et agissant dans le sens de l'ouverture de la soupape, par la source de pression de freinage (5), caractérisée par le fait que la soupape d'arrêt (2, 3) est shuntée par un canal de dérivation (12) dont la section transversale de passage est étranglée par une tuyère.

2. Soupape anti-enrayage selon la revendication 1, caractérisée par le fait que le canal de dérivation est réalisé sous la forme d'un perçage d'étranglement qui traverse une paroi (11) qui porte le siège de soupage (3) de la soupape d'arrêt (2, 3).

3. Soupape anti-enrayage pour des véhicules freinés à l'air comprimé, comportant une soupape d'arrêt, éventuellement une soupape d'arrêt à membrane (2, 3), montée dans une liaison menant d'une source de pression de freinage (5) à au moins un cylindre de frein (10), laquelle soupape d'arrêt est susceptible d'être commutée par un élément de piston ou de membrane (2) qui, agissant dans le sens de la fermeture de la soupape, est chargé par une pression de la source de pression de freinage (5) amenée avec contrôle par une soupape de pré-commande (7) et par la force d'un ressort (13) et d'autre part et en permanence, et agissant dans le sens de l'ouverture de la soupape, par la source de pression de freinage (5), caractérisée par le fait que le cylindre de frein (10) est relié à l'atmosphère par l'intermédiaire d'une tuyère (14).

4. Soupape anti-enrayage selon la revendication 3, caractérisée par le fait que dans la liaison qui mène du cylindre de frein (10) à l'atmosphère, par l'intermédiaire de la tuyère (14), est disposée une soupape de mise à l'atmosphère qui n'est ouverte que pour une pression inférieure à une pression déterminée dans le cylindre de frein et qui est éventuellement réalisée sous la forme d'une soupape d'arrêt à membrane chargée par un ressort dans le sens de l'ouverture.

Fig 1

Fig 2